# EUROPEAN PATENT APPLICATION

(11) **EP 4 663 825 A1**
(43) Date of publication of application: **17.12.2025**
(21) Application number: 24796538.7
(22) Date of filing: 20.02.2024
(51) Int. Cl.: D04H 1/4218, B01D 39/16, B01D 39/20, D04H 1/435, D04H 1/545, D21H 13/16, D21H 13/24, D21H 13/40

(54) **INORGANIC FIBER SHEET**

(30) Priority: 28.04.2023 JP 2023074968
(71) Applicant: Tomoegawa Corporation, Tokyo 104-8335 (JP)
(72) Inventor: HYOUDOU, Ryougo, Shizuoka-shi, Shizuoka 421-0192 (JP); SATO, Takeshi, Shizuoka-shi, Shizuoka 421-0192 (JP)
(74) Representative: V.O.
(86) International application number: PCT/JP2024/006092
(87) International publication number: WO 2024/224779

(57) **Abstract**

An object of the present invention is to provide an inorganic fiber sheet capable of achieving both moldability and processability during corrugation processing. The present invention provides an inorganic fiber sheet including glass fibers, an organic binder, and organic fibers, in which a content of the organic binder is 8% to 20% by mass, and the organic binder is composed of two or more kinds of organic binders having different exothermic peak temperatures in differential thermal analysis.

## Description

### TECHNICAL FIELD

The present invention relates to an inorganic fiber sheet.

### BACKGROUND ART

In the related art, a technology of forming a honeycomb structure by performing corrugation processing on an inorganic fiber sheet in order to prepare a filter containing inorganic fibers as a main component has been known. For example, Patent Document 1 describes an inorganic fiber sheet having a corrugated shape, which is obtained by using a corrugation processing device having a gear. In addition, Patent Document 1 describes that an inorganic fiber sheet having a corrugated shape and an inorganic fiber sheet having a flat shape are laminated on each other to form a skeleton having a honeycomb shape.

### Citation List

### Patent Document

Patent Document 1: Japanese Unexamined Patent Application, First Publication No. 2010-13773

### SUMMARY OF INVENTION

### Technical Problem

In a case of processing an inorganic fiber sheet using a corrugation processing device having a gear, moldability (sticking resistance in which peeling from the gear easily occurs after processing) and processability (processing suitability for processing a waveform) are required. In a case where the moldability or processability is degraded in a situation where the variation in temperature, pressure, and time during the corrugation processing is large, the yield of the material is decreased, and the productivity is degraded.

An object of the present invention is to provide an inorganic fiber sheet capable of achieving both moldability and processability during corrugation processing. Solution to Problem

According to a first aspect of the present invention, there is provided an inorganic fiber sheet including: glass fibers; an organic binder; and organic fibers, in which a content of the organic binder is 8% to 20% by mass, and the organic binder is composed of two or more kinds of organic binders having different exothermic peak temperatures in differential thermal analysis.

According to a second aspect, in the first aspect, the two or more kinds of organic binders each have an exothermic peak temperature of 300°C to 440°C in differential thermal analysis, and in a case where a highest exothermic peak temperature is defined as T1 and a lowest exothermic peak temperature is defined as T2, an organic binder having the exothermic peak temperature T1 and an organic binder having the exothermic peak temperature T2 are different from each other, and an absolute value of a difference |T1 - T2| is 50°C to 110°C.

According to a third aspect, in the second aspect, a content of the organic binder having the exothermic peak temperature T1 is 5% to 16% by mass, a content of the organic binder having the exothermic peak temperature T2 is 1% to 8% by mass, and the content of the organic binder having the exothermic peak temperature T1 is greater than the content of the organic binder having the exothermic peak temperature T2.

According to a fourth aspect, in any one of the first to third aspects, a content of the organic fibers is greater than 20% by mass and 30% by mass or less.

According to a fifth aspect, in any one of the first to fourth aspects, the organic fibers are polyester fibers.

According to a sixth aspect, in any one of the first to fifth aspects, a ratio of a tensile strength in a longitudinal direction to a tensile strength in a width direction (tensile strength in longitudinal direction/tensile strength in width direction) in the inorganic fiber sheet is 2 to 8.

According to a seventh aspect, in any one of the first to sixth aspects, the glass fibers have an average fiber diameter of 6 to 8 (µm) and a standard deviation of 3 (µm) or less in fiber diameter variation.

According to an eighth aspect, in any one of the first to seventh aspects, the inorganic fiber sheet does not contain an acrylic resin.

According to a ninth aspect, in any one of the first to eighth aspects, the inorganic fiber sheet is used for a honeycomb filter.

### Advantageous Effects of Invention

According to the present invention, it is possible to provide an inorganic fiber sheet capable of achieving both moldability and processability during corrugation processing.

### DESCRIPTION OF EMBODIMENTS

Hereinafter, the present invention will be described based on preferred embodiments.

The inorganic fiber sheet of the embodiment includes glass fibers, an organic binder, and organic fibers.

The inorganic fiber sheet of the embodiment mainly contains glass fibers. The content of the glass fibers in the inorganic fiber sheet of the embodiment is preferably 50% by mass or greater and more preferably less than 72% by mass.

The material of the glass fibers is not particularly limited, and examples thereof include E glass having a low content of non-alkali, S glass having high strength, C glass having excellent acid resistance, and ECR glass having excellent corrosion resistance.

The inorganic fiber sheet of the embodiment contains an organic binder. It is preferable that the organic binder is melted at 250°C or lower. In this manner, the organic binder can function as a binder in the inorganic fiber sheet. The lower limit of the melting point of the organic binder is preferably appropriately set depending on the purpose, but a substance that is a solid at least at room temperature (5°C to 35°C) is preferable.

The organic binder may be formed of a material exhibiting thermoplasticity, such as a thermoplastic resin. In a case where the organic binder has a fibrous shape, the organic binder is easily blended into other fibrous materials such as glass fibers, which is preferable.

The content of the organic binder in the inorganic fiber sheet of the embodiment is preferably 8% to 20% by mass and more preferably 8% to 17% by mass. It is preferable that the content of the organic binder is greater than or equal to the above-described lower limit from the viewpoint of ensuring sufficient tensile strength required for the corrugation processing. It is preferable that the content of the organic binder is less than or equal to the above-described upper limits from the viewpoint that a waveform can be satisfactorily formed during the corrugation processing.

The organic binder is composed of two or more kinds of organic binders having different exothermic peak temperatures in differential thermal analysis. In a case where the organic binder is formed of only one kind of organic binder, it is difficult to achieve both moldability (sticking resistance in which peeling from the gear easily occurs after processing) and processability (processing suitability for processing a waveform). Both the moldability and the processability during corrugation processing can be achieved by appropriately blending two or more kinds of organic binders.

The organic binder is softened during corrugation processing and can satisfactorily form a corrugated waveform. In addition, the organic binder can bind the entangling points of the fibers by forming a coating film on the fibers during paper-making of the inorganic fiber sheet. In this manner, it is possible to prevent the fibers from falling off and to prevent the fibers from sticking to the gear during the corrugation processing.

It is preferable that the two or more kinds of organic binders each have an exothermic peak temperature of 300°C to 440°C in differential thermal analysis. In a case where the exothermic peak temperature is higher than or equal to the above-described lower limit, the thermal stability is excellent during corrugation processing. In a case where the exothermic peak temperature is lower than or equal to the above-described upper limit, the vaporization of the organic component is suppressed in the sintering step after the corrugation processing.

More specifically, in a case where, among the exothermic peak temperatures of the two or more kinds of organic binders, the highest exothermic peak temperature is defined as T1 and the lowest exothermic peak temperature is defined as T2, the organic binder having the exothermic peak temperature T1 and the organic binder having the exothermic peak temperature T2 are different from each other. Further, the absolute value of the difference |T1 - T2| is preferably 50°C to 110°C and more preferably 80°C to 100°C.

In a case where the two or more kinds of organic binders include an organic binder having an exothermic peak temperature T2, at least a part of the organic binder is melted to bind the entangling points of the fibers.

Further, in the inorganic fiber sheet of the embodiment, the content of the organic binder having the exothermic peak temperature T1 is 5% to 16% by mass, the content of the organic binder having the exothermic peak temperature T2 is 1% to 8% by mass, and the content of the organic binder having the exothermic peak temperature T1 is preferably greater than the content of the organic binder having the exothermic peak temperature T2.

In a case where the content of the organic binder having the exothermic peak temperature T2 is greater than or equal to the lower limit, an appropriate amount of a coating film is formed at the entangling points of the fibers so that the entangling points of the fibers can be bound. In this manner, it is possible to prevent the fibers from falling off and to prevent the fibers from sticking to the gear during the corrugation processing. In a case where the content of the organic binder having the exothermic peak temperature T2 is less than or equal to the upper limit, the resin coating film is not excessively formed, and thus the waveform can be satisfactorily formed during the corrugation processing.

The material of the organic binder is not particularly limited, and examples thereof include two or more kinds of organic binders belonging to each group such as a polyvinyl alcohol (PVA)-based resin, a polyethylene resin, a polypropylene resin, an acrylic resin, a polyvinyl chloride resin, a nylon resin, and starch.

In a case where the inorganic fiber sheet of the embodiment contains two or more kinds of organic binders, any two or more of the organic binders or all the organic binders may be materials belonging to the same group. At least one of the two or more kinds of organic binders may be a material belonging to a group different from that of any other one kind, or may be a material belonging to groups different from each other.

It is preferable that the two or more kinds of organic binders belonging to the same group have at least different exothermic peak temperatures. Examples of a phenomenon that contributes to the expression of an exothermic peak in the differential thermal analysis include combustion, oxidation, and crystallization. Examples of a phenomenon that contributes to the expression of an endothermic peak in the differential thermal analysis include evaporation, sublimation, melting, and phase transition.

The inorganic fiber sheet of the embodiment contains organic fibers. It is preferable that the organic fibers are not melted at 250°C or lower, which is different from a case of the organic binder.

The material of the organic fibers is not particularly limited, and examples thereof include polyethylene fibers, polypropylene fibers, polybutene fibers, nylon fibers, rayon fibers, cupra fibers, acetate fibers, polyvinyl chloride fibers, polyurethane fibers, polyparaphenylene benzobisoxazole fibers, polyamideimide fibers, polyimide fibers, polyarylate fibers, polyetherimide fibers, vinylon fibers, polycarbonate fibers, ethylene vinyl acetate fibers, ethylene vinyl alcohol fibers, polyphenylene sulfide fibers, polyester fibers (such as polyethylene terephthalate fibers, polybutylene terephthalate fibers, and polyethylene naphthalate fibers), cellulose fiber such as wood pulp, and aramid fibers. Any one kind or two or more kinds of these organic fibers may be selected.

The content of the organic fibers in the inorganic fiber sheet of the embodiment is preferably greater than 20% by mass and 30% by mass or less and more preferably 22% to 28% by mass. In a case where the content of the organic fibers is greater than the above-described lower limits, the supported amount of the functional material impregnated after the corrugation processing is excellent even after sintering. In a case where the content of the organic fibers is less than or equal to the above-described upper limits, the amount of ash after sintering is reduced.

As the organic fibers, polyester fibers such as a polyethylene terephthalate (PET) resin are preferable. In this manner, the organic fibers are not melted during the paper-making of the inorganic fiber sheet, and the organic fibers are not melted during the corrugation molding at 200°C or lower. Further, PET fibers are preferable from the viewpoints of ease of sintering, the cost, and availability. At least some of the PET fibers may be modified PET fibers or recycled PET fibers.

A polycarboxylic acid residue contained in the PET fibers is not limited to 100% by mass of a terephthalic acid residue (terephthaloyl group), and the PET fibers may contain other polycarboxylic acid residues with the terephthalic acid residue as the main residue. The other polycarboxylic acid residues are not particularly limited, and examples thereof include an aromatic polycarboxylic acid residue such as an isophthalic acid residue (isophthaloyl group) or a naphthalic acid residue (naphthaloyl group), and an aliphatic polycarboxylic acid residue such as an adipic acid residue (adipoyl group) or a sebacic acid residue (sebacoyl group).

A polyol residue contained in the PET fibers is not limited to 100% by mass of an ethylene glycol residue (ethylene group), and the PET fibers may contain other polyol residues with the ethylene glycol residue as the main residue. Examples of the other polyol residues include a propylene glycol residue (propylene group), a butanediol residue (butylene group), a 1,4-cyclohexanedimethanol residue, and a diethylene glycol residue.

It is preferable that the fibers of the inorganic fiber sheet of the embodiment have aligning properties between the longitudinal direction and the width direction. Here, the longitudinal direction is a machine direction (MD), and the width direction is a cross direction (CD), but in the inorganic fiber sheet of the embodiment, a direction in which a waveform is formed during corrugation processing of the inorganic fiber sheet is defined as the longitudinal direction, and a direction orthogonal to the longitudinal direction is defined as the width direction. Further, in a case where the inorganic fiber sheet of the embodiment is produced by a known paper-making machine, it is preferable that each of the MD direction and the CD direction in a paper-making machine matches the longitudinal direction and the width direction during the corrugation processing.

Specifically, in the inorganic fiber sheet of the embodiment, a ratio of the tensile strength in the longitudinal direction to the tensile strength in the width direction (tensile strength in longitudinal direction/tensile strength in width direction) is preferably 2 to 8 and more preferably 2.5 to 5.0. In a case where the ratio between the tensile strengths is greater than or equal to the above-described lower limits, the tensile strength required for corrugation processing can be sufficiently ensured. In the case where the ratio between the tensile strengths is less than or equal to the above-described upper limits, a waveform can be satisfactorily formed during the corrugation processing.

In the inorganic fiber sheet of the embodiment, it is preferable that the glass fibers have a fiber diameter distribution suitable for corrugation processing.

The average fiber diameter of the glass fibers is preferably 6 to 8 µm. In a case where the average fiber diameter of the glass fibers is greater than or equal to the above-described lower limit, the functional material can be suitably supported during the impregnation performed after the corrugation processing. In a case where the average fiber diameter of the glass fibers is less than or equal to the above-described upper limit, it is advantageous for preventing air leakage in a filter of a final product.

The fiber diameter variation in the glass fibers is preferably 3 µm or less in terms of standard deviation. In a case where the standard deviation is less than or equal to the above-described upper limit, the gaps between the fibers are reduced, which is advantageous for preventing air leakage in the filter of the final product.

It is preferable that the inorganic fiber sheet of the embodiment does not contain an acrylic resin. For example, in the organic binder, acrylic fibers may not be used.

The basis weight of the inorganic fiber sheet of the embodiment is preferably 20.0 to 25.0 g/m² and more preferably 21.2 to 24.2 g/m². In a case where the basis weight thereof is greater than or equal to the above-described lower limits, the tensile strength that enables withstanding transport during the corrugation processing can be sufficiently ensured. In a case where the basis weight thereof is less than or equal to the above-described upper limits, the processability (processing suitability for processing a waveform) during the corrugation processing is likely to be ensured.

The density of the inorganic fiber sheet of the embodiment is preferably 0.130 to 0.160 g/cm³.

In a case where the density thereof is greater than or equal to the above-described lower limit, the inorganic fiber sheet does not have to be excessively thick, the flow path of the honeycomb is likely to be ensured in the filter of the final product, and a pressure loss during filtering can be reduced. In a case where the density thereof is less than or equal to the above-described upper limit, the processability (processability for processing a waveform) during the corrugation processing is likely to be ensured.

The inorganic fiber sheet of the embodiment is suitable for a honeycomb filter. In addition to the inorganic fibers (glass fibers), the organic fibers, and the organic binder, the inorganic fiber sheet can contain an inorganic binder, a filler, and the like as optional components.

In the inorganic fiber sheet of the embodiment, only glass fibers may be used as the inorganic fibers, or inorganic fibers other than the glass fibers may be used in combination. In the inorganic fiber sheet of the embodiment, only the organic binder may be used as the binder of the inorganic fiber, or the organic binder and the inorganic binder may be used in combination.

A method of producing the inorganic fiber sheet is not particularly limited, and the inorganic fiber sheet can be produced by performing paper-making on a raw material slurry using a known paper-making machine, and dewatering and drying the obtained wet sheet. The raw material slurry contains various materials including the fibers and the binders described above and preferably contains water as a medium. An additive may be appropriately blended into the raw material slurry.

Specific examples of the paper-making machine are not particularly limited, and a cylinder paper-making machine, an inclined paper-making machine, a Fourdrinier paper-making machine, or a short net paper-making machine may be used alone. Among these, a combination paper-making machine in which the same type or different types of paper-making machines are combined may be used.

A method of drying the wet sheet is not particularly limited, and a known dryer such as a Yankee dryer, a cylinder dryer, an air dryer, or an infrared dryer can be used. The drying temperature is, for example, about 100°C to 200°C.

The dimensions of the inorganic fiber sheet of the embodiment are not particularly limited, and the inorganic fiber sheet can also be wound in a roll shape. In addition, the inorganic fiber sheet can also be used by being cut into predetermined dimensions or processed into a predetermined shape.

The inorganic fiber sheet of the embodiment has excellent moldability and processability during the corrugation processing, and thus is suitable for applications in which corrugation processing is performed. The honeycomb filter to be produced by using the inorganic fiber sheet of the embodiment includes a wavy sheet obtained by performing corrugation processing on the inorganic fiber sheet. In the honeycomb filter, the combination of the inorganic fiber sheets forming a honeycomb shape is not particularly limited, and an appropriate configuration can be used.

The honeycomb shape of the inorganic fiber sheet having a honeycomb shape may be obtained by a combination of two or more wavy sheets or a combination of one or more wavy sheets and one or more sheets having a flat shape. Here, the sheet having a flat shape is an inorganic fiber sheet that is not corrugated, and may be a linear sheet or a flat sheet, or may be a curved sheet or a curved surface sheet.

In a case of forming a sheet having a honeycomb shape from an inorganic fiber sheet, for example, a plurality of wavy sheets may be superimposed. In addition, one or more wavy sheets may be sandwiched between a plurality of sheets having a flat shape. Individual wavy sheets may be superimposed on both sides of the sheet having a flat shape. A plurality of the wavy sheets and a plurality of the sheets having a flat shape may be alternately superimposed. In a case where a plurality of the wavy sheets are used, the shape, the height, the pitch, and the like of the waveforms may be the same as each other. Wavy sheets having waveforms with different shapes, heights, pitches, and the like may be combined.

The inorganic fiber sheet of the embodiment may be a sheet having a flat shape or a sheet having a roll shape before the corrugation processing or may be a wavy sheet or a sheet having a honeycomb shape after the corrugation processing. Since the wavy sheet having a large surface area can be compactly stored and disposed, the sheet having a honeycomb shape can also be used for applications other than a filter, such as an adsorption sheet, a dehumidifying sheet, and a deodorizing sheet.

The inorganic fiber sheet of the embodiment can support a functional material such as silica gel, zeolite, activated carbon, or a metal oxide. The functional material may have one or more functions selected from a catalyst, an adsorbent, a dehumidifier, a deodorant, and the like. The support of the functional material in the inorganic fiber sheet may be carried out in a stage of the inorganic fiber sheet before the corrugation processing or may be carried out after the corrugation processing.

The inorganic fiber sheet of the embodiment may be sintered before being provided for applications as a product. The purpose of the sintering is not particularly limited, and examples thereof include modification of functional materials and reduction of organic components. The reduction of the organic components during sintering may be suppressed, or the organic components may be removed so that the inorganic fiber sheet is suitable for use at a higher temperature. The sintering step of the inorganic fiber sheet may be carried out in a stage of the inorganic fiber sheet before the corrugation processing or may be carried out after the corrugation processing.

The present invention has been described above based on the preferred embodiments, but the present invention is not limited to the embodiments described above, and various modifications can be made without departing from the scope of the present invention. Examples of the modifications include additions, replacements, omissions, and other changes of constituent elements in each embodiment.

### Examples

Hereinafter, the present invention will be described in detail with reference to examples.

Raw material slurries were prepared with the compositions (% by mass) listed in Tables 1 to 3 to produce inorganic fiber sheets by a wet paper-making method.

In the compositions listed in Tables 1 to 3, the raw materials of the organic binders and the organic fibers are shown using the following abbreviations.

"PVA452" is a PVA fiber (exothermic peak temperature: 452°C).

"PVA430" is a PVA fiber (exothermic peak temperature: 430°C).

"PVA400" is a PVA fiber (exothermic peak temperature: 400°C).

"PP342" is a polypropylene fiber (exothermic peak temperature: 342°C).

"PVA360" is a PVA fiber (exothermic peak temperature: 360°C).

"PVA300" is a PVA fiber (exothermic peak temperature: 300°C).

"PVA289" is a PVA fiber (exothermic peak temperature: 289°C).

"PE469" is a polyethylene fiber (exothermic peak temperature: 469°C).

"PVA380" is a PVA fiber (exothermic peak temperature: 380°C).

"AC320" is an acrylic resin (exothermic peak temperature 320°C).

"PET542" is a PET fiber (exothermic peak temperature: 542°C).

"AR553" is an aramid fiber (exothermic peak temperature: 553°C).

In the compositions listed in Tables 1 to 3, glass fibers having an average fiber diameter of 7 µm and a standard deviation of 2 µm in terms of fiber diameter were used as the glass fibers.

"Aligning properties" in Tables 1 to 3 denote a value of the ratio of the tensile strength in the longitudinal direction to the tensile strength in the width direction (tensile strength in longitudinal direction/tensile strength in width direction) of the inorganic fiber sheet.

In the corrugation processing of the inorganic fiber sheet, the inorganic fiber sheet was molded into a wavy sheet having a height of 5.0 mm and a pitch of 25.0 mm at a processing temperature of 180°C. The moldability and the processability of the obtained wavy sheet during the corrugation processing were evaluated.

"Moldability" was evaluated according to the following evaluation criteria for the sticking resistance during corrugation processing.

Excellent (A): The inorganic fiber sheet was completely peeled off from the gear.

Satisfactory (B): The inorganic fiber sheet was partially stuck, but was peeled off.

Unacceptable (C): The inorganic fiber sheet was not peeled off from the gear.

"Processability" was evaluated according to the following evaluation criteria for processing suitability during corrugation processing.

Excellent (A): The waveform was completely formed on the inorganic fiber sheet by the corrugation processing.

Satisfactory (B): Sites where the waveform was not partially processed on the inorganic fiber sheet by the corrugation processing were found.

Unacceptable (C): A plurality of sites where the waveform was not processed on the inorganic fiber sheet by the corrugation processing were found.

"Comprehensive evaluation" was evaluation performed according to the following evaluation criteria.

5 in comprehensive evaluation: Both the moldability and the processability were excellent (A). 4 in comprehensive evaluation: The moldability was satisfactory (B) and the processability was excellent (A). 3 in comprehensive evaluation: The moldability was excellent (A) and the processability was satisfactory (B). 2 in comprehensive evaluation: Both the moldability and the processability were satisfactory (B).

1 in comprehensive evaluation: Any one of the moldability and the processability was unacceptable (C).

**[Table 1]**

| | | | Exmple 1 | Comparative Example 1 | Example 2 | Comparative Example 2 | Comparative Example 3 | Example 3 | Example 4 | Example 5 | Example 6 |
|---|---|---|---|---|---|---|---|---|---|---|---|
| Composition (% by mass) | Organic binder | PVA452 | | | | | | | | | 6 |
| | | PVA430 | 6 | 5 | 15 | 15 | 9 | 6 | | 6 | |
| | | PVA400 | | | | | | | | | |
| | | PP342 | | | | | | | 6 | | |
| | | PVA360 | 3 | 2 | 3 | 7 | | | 3 | 3 | 3 |
| | | PVA300 | | | | | | | | | |
| | | PVA289 | | | | | | | | | |
| | | PE469 | | | | | | 3 | | | |
| | | PVA380 | | | | | | | | 5 | |
| | | AC320 | | | | | | | | | |
| | Organic fibers | PET542 | 25 | 25 | 25 | 25 | 25 | 25 | 25 | 25 | 25 |
| | | AR553 | | | | | | | | | |
| | Glass fibers | | 66 | 68 | 57 | 53 | 66 | 66 | 66 | 61 | 66 |
| | Total amount | | 100 | 100 | 100 | 100 | 100 | 100 | 100 | 100 | 100 |
| Physical properties | Aligning properties | | 3.5 | 3.5 | 3.5 | 3.5 | 3.5 | 3.5 | 3.5 | 3.5 | 3.5 |
| Evaluation | Moldability | | A | C | B | A | C | B | B | B | A |
| | Processability | | A | A | A | C | A | A | A | A | B |
| | Comprehensive evaluation | | 5 | 1 | 4 | 1 | 1 | 4 | 4 | 4 | 3 |

**[Table 2]**

| | | | Example 7 | Example 8 | Example 9 | Example 10 | Example 11 | Example 12 | Example 13 | Example 14 | Example 15 |
|---|---|---|---|---|---|---|---|---|---|---|---|
| Composition (% by mass) | Organic binder | PVA452 | | | | | | | | | |
| | | PVA430 | | | 6 | 4.5 | 5 | 14 | 18 | 8 | 8 |
| | | PVA400 | 6 | 6 | | | | | | | |
| | | PP342 | | | | | | | | | |
| | | PVA360 | | 3 | | 3.5 | 3.5 | 2 | 2 | 0.5 | 3 |
| | | PVA300 | | | 3 | | | | | | |
| | | PVA289 | 3 | | | | | | | | |
| | | PE469 | | | | | | | | | |
| | | PVA380 | | | | | | | | | |
| | | AC320 | | | | | | | | | |
| | Organic fibers | PET542 | 25 | 25 | 25 | 25 | 25 | 25 | 25 | 25 | 25 |
| | | AR553 | | | | | | | | | |
| | Glass fibers | | 66 | 66 | 66 | 67 | 66.5 | 59 | 55 | 66.5 | 64 |
| | Total amount | | 100 | 100 | 100 | 100 | 100 | 100 | 100 | 100 | 100 |
| Physical properties | Aligning properties | | 3.5 | 3.5 | 3.5 | 3.5 | 3.5 | 3.5 | 3.5 | 3.5 | 3.5 |
| Evaluation | Moldability | | B | B | B | B | A | B | B | B | A |
| | Processability | | B | B | A | B | B | A | B | A | A |
| | Comprehensive evaluation | | 2 | 2 | 4 | 2 | 3 | 4 | 2 | 4 | 5 |

**[Table 3]**

| | | | Example 16 | Example 17 | Example 18 | Example 19 | Example 20 | Example 21 | Example 22 | Example 23 |
|---|---|---|---|---|---|---|---|---|---|---|
| Composition (% by mass) | Organic binder | PVA452 | | | | | | | | |
| | | PVA430 | 12 | 12 | 6 | 6 | 6 | 6 | 6 | 6 |
| | | PVA400 | | | | | | | | |
| | | PP342 | | | | | | | | |
| | | PVA360 | 6 | 10 | 8 | 3 | 3 | 3 | 3 | 3 |
| | | PVA300 | | | | | | | | |
| | | PVA289 | | | | | | | | |
| | | PE469 | | | | | | | | |
| | | PVA380 | | | | | | | | |
| | | AC320 | | | | | | | | 5 |
| | Organic fibers | PET542 | 25 | 25 | 25 | | 25 | 25 | 25 | 25 |
| | | AR553 | | | | 25 | | | | |
| | Glass fibers | | 57 | 53 | 61 | 66 | 66 | 66 | 66 | 61 |
| | Total amount | | 100 | 100 | 100 | 100 | 100 | 100 | 100 | 100 |
| Physical properties | Aligning properties | | 3.5 | 3.5 | 3.5 | 3.5 | 1.2 | 7.0 | 9.0 | 4.5 |
| Evaluation | Moldability | | B | B | A | B | B | A | A | B |
| | Processability | | A | B | B | B | A | A | B | B |
| | Comprehensive evaluation | | 4 | 2 | 3 | 2 | 4 | 5 | 3 | 2 |

In Examples 1 to 23, both the moldability and the processability were excellent (A) or satisfactory (B), and the comprehensive evaluation was 2 or higher. In Comparative Examples 1 to 3, the comprehensive evaluation was 1.

### INDUSTRIAL APPLICABILITY

According to the present invention, it is possible to provide an inorganic fiber sheet capable of achieving both moldability and processability during corrugation processing.

## Claims

1. An inorganic fiber sheet comprising:
glass fibers;
an organic binder; and
organic fibers,
wherein a content of the organic binder is 8% to 20% by mass, and
the organic binder is composed of two or more kinds of organic binders having different exothermic peak temperatures in differential thermal analysis.

2. The inorganic fiber sheet according to Claim 1,
wherein the two or more kinds of organic binders each have an exothermic peak temperature of 300°C to 440°C in differential thermal analysis, and
in a case where among the exothermic peak temperature, a highest exothermic peak temperature is defined as T1 and a lowest exothermic peak temperature is defined as T2, an organic binder having the exothermic peak temperature T1 and an organic binder having the exothermic peak temperature T2 are different from each other, and an absolute value of a difference |T1 - T2| is 50°C to 110°C.

3. The inorganic fiber sheet according to Claim 2,
wherein a content of the organic binder having the exothermic peak temperature T1 is 5% to 16% by mass,
a content of the organic binder having the exothermic peak temperature T2 is 1% to 8% by mass, and
the content of the organic binder having the exothermic peak temperature T1 is greater than the content of the organic binder having the exothermic peak temperature T2.

4. The inorganic fiber sheet according to Claim 1,
wherein a content of the organic fibers is greater than 20% by mass and 30% by mass or less.

5. The inorganic fiber sheet according to Claim 1,
wherein the organic fibers are polyester fibers.

6. The inorganic fiber sheet according to Claim 1,
wherein a ratio of a tensile strength in a longitudinal direction to a tensile strength in a width direction (tensile strength in longitudinal direction/tensile strength in width direction) in the inorganic fiber sheet is 2 to 8.

7. The inorganic fiber sheet according to Claim 1,
wherein the glass fibers have an average fiber diameter of 6 to 8 (µm) and a standard deviation of 3 (µm) or less in fiber diameter variation.

8. The inorganic fiber sheet according to Claim 1,
wherein the inorganic fiber sheet does not contain an acrylic resin.

9. The inorganic fiber sheet according to any one of Claims 1 to 8,
wherein the inorganic fiber sheet is used for a honeycomb filter.
